# EUROPEAN PATENT APPLICATION

(11) **EP 3 435 444 A1**
(43) Date of publication of application: **30.01.2019**
(21) Application number: 17182890.8
(22) Date of filing: 25.07.2017
(51) Int. Cl.: H01M 2/34, H01M 2/02, H01M 10/0525, H01M 10/42, H01H 35/14

(54) **TRIGGER DEVICE, SAFETY APPARATUS, ELECTRIC ENERGY STORE DEVICE AND METHOD FOR TRIGGERING A SAFETY DEVICE FOR AN ELECTRIC ENERGY STORE UNIT**

(71) Applicant: Lithium Energy and Power GmbH & Co. KG, 70469 Stuttgart (DE)
(72) Inventor: Pilz, Thomas, 71229 Leonberg (DE); Doering, Valentin, 76227 Karlsruhe (DE)
(74) Representative: Isarpatent

(57) **Abstract**

The present invention relates to a trigger device (18) for triggering a safety device (22) for taking safety measures concerning an electric energy store unit (12), especially for triggering a discharge device (22) for discharging said electric energy store unit (12), in the event of an external mechanical impact on said electric energy store unit (12), the trigger device (18) including:
a plate-like trigger element (24) and
an electrically conducting path (32) mechanically coupled to the plate-like trigger element (24) in such way, that a deformation and/or fracture and/or shift of the plate-like trigger element (24) caused by a force F of the external mechanical impact acting on said plate-like trigger element (24) generates a trigger signal by rapidly increasing the electrical resistance of the conducting path (32).

The present invention further relates to a safety apparatus (16) with a corresponding trigger device (18), an electric energy store device (10) with an electric energy store unit (12) and a corresponding safety apparatus (16) and a method for triggering safety measures concerning an electric energy store unit (12).

## Description

The present invention relates to a trigger device for triggering a safety device for taking safety measures concerning an electric energy store unit, especially for triggering a discharge device for discharging of said electric energy store unit, in the event of an external mechanical impact on said electric energy store unit, the trigger device including a plate-like trigger element for covering at least a part of the surface of the electric energy store unit and an electrically conducting path mechanically coupled to the plate-like trigger element.

The present invention further relates to a safety apparatus with a corresponding trigger device, an electric energy store device with an electric energy store unit and a corresponding method for triggering safety measures concerning an electric energy store unit.

### State of the art

The electric energy store unit especially is a battery unit, preferrably a rechargeable battery unit. Corresponding batteries for electric vehicles (EV: Electrical Vehicles) as well as for vehicles with hybrid (HEV: Hybrid Electrical Vehicles) and plugin hybrid drive (PHEV: Plugin Hybrid Electrical Vehicles) of lithium ion ("Li ion") technology (LIT: Lithium Ion Technology) are in general structured hierarchically. The smallest units are cells. Several of these cells are assembled into a module, from which the batteries are built up.

Battery units for electrochemical storage frequently contain aggressive substances which, when set free, may lead to the endangerment of persons and objects. In some energy store units, for instance lithium ion (Li ion) battery units, there is the additional danger of fire and/or explosion, since the battery unit contains easily oxidizable materials (e.g. electrolyte) and strong oxidizers (e.g. cathode material). As a result, known batteries and capacitors are constructed in such a way that they are able to withstand the mechanical stresses that are to be expected, without a jacket of the battery being injured, so that transition of the dangerous substances into the surroundings of the energy store is prevented.

In spite of this, damage to the jacket is never quite to be excluded. In the field of motor vehicles, for example, in which a battery may be used for supplying the vehicle electrical system or for driving something, in case of an accident, even a well secured battery may be greatly deformed and may burst open. The ignition of the exiting electrolyte may take place during the deformation or later, quite possibly even after several seconds or minutes.

Document JP 2010 183 803 A1 describes a safety apparatus with a safety device being a discharge device for discharging an electric energy store unit in the event of an external mechanical impact on said electric energy store unit and a trigger device for triggering said discharge device. The trigger device comprises a plate-like trigger element for covering at least a part of the surface of the electric energy store unit and the discharge device comprises an electrically conducting path, namely a short circuit clasp, mechanically coupled to the plate-like trigger element of the trigger device. Each of the documents US 5,818,122 A and JPH 09284904 A shows a safety apparatus of a quite similar type.

### Disclosure of the invention

The trigger device for triggering a safety device with the features of claim 1 has the advantage that the corresponding safety measure can be performed quickly.

The trigger device according to the invention includes (i) a plate-like trigger element, especially for covering at least a part of the surface of the electric energy store unit, and (ii) an electrically conducting path mechanically coupled to the plate-like trigger element in such way, that a deformation and/or fracture and/or shift of the plate-like trigger element caused by a force F of the external mechanical impact acting on said plate-like trigger element generates a trigger signal by rapidly increasing the electrical resistance of the conducting path. Preferably the shift, fracture, and/or deformation of the plate-like trigger element will interrupt/disconnect the electrically conductive connection via the conducting path. The electric energy store unit especially is a battery unit, preferably a rechargeable battery unit (also known as secondary cell, or accumulator).

In general, the trigger device can trigger different kinds of safety devices for different kinds of protection and/or warning mechanisms. According to a preferred embodiment of the invention the safety device is a discharge device for discharging of the electric energy store unit.

According to an embodiment of the invention, the trigger device further comprises at least one deformable intermediate element for mounting the plate-like trigger element on the surface of the electric energy store unit. The intermediate element decouples the plate-like trigger element mechanically from the electric energy store unit.

According to another embodiment of the invention, the trigger device further comprises a destruction tool, especially a knife-like splitting tool, for interrupting/disconnecting the electrical connection of the conducting path. Said tool is located between the plate-like trigger element and a conducting element forming the complete conducting path or at least one of a plurality of sections of said conducting path. Preferably said tool is mounted on the plate-like trigger element and oriented towards the conducting element.

According to a further embodiment of the invention, a plurality of plate-like trigger elements are forming an outer shell for including the electric energy store unit.

According to yet another embodiment of the invention, the complete conducting path or at least one of a plurality of sections of said conducting path is located on and/or in the plate-like trigger element.

Preferably the conducting path or at least one of a plurality of sections of said conducting path is meander-shaped. By means of a meander-shaped conducting path/ conducting path section, an external mechanical impact with various force components can be used for triggering the discharge device.

The present invention further relates to a safety apparatus comprising the aforementioned trigger device, a monitoring circuitry for monitoring the resistance of the conducting path of said trigger device, and a safety device for taking safety measures concerning an electric energy store unit, especially a discharge device to discharge said electric energy store unit, in response to a trigger signal of the trigger device, namely a rapidly increased resistance of the conducting path.

The present invention further relates to an electric energy store device comprising an electric energy store unit, especially a battery unit, and the aforementioned safety apparatus.

According to an embodiment of the invention, the unit is a Li-Ion battery unit with at least one Li-Ion battery element, especially a Li-Ion battery cell.

The battery element/battery cell may be formed, inter alia, as a so-called jelly roll or wounded type cell, respectively, or it may have a stacked arrangement, for example.

The present invention finally relates to a method for triggering safety measures of a safety device concerning an electric energy store unit, especially a discharge of said electric energy store unit, by use of a trigger device in the event of an external mechanical impact on the electric energy store unit, the trigger device including a plate-like trigger element, which element covers at least a part of the surface of the electric energy store unit and an electrically conducting path, wherein the electrically conducting path is mechanically coupled to the plate-like trigger element in such way, that a deformation and/or fracture and/or shift of the plate-like trigger element caused by a force F of the external mechanical impact acting on said plate-like trigger element will generate a trigger signal by rapidly increasing the electrical resistance of the conducting path.

With regard to further technical features and advantages of the trigger device, safety apparatus, battery device and method for triggering a discharge of an electric energy store unit as described above, it is referred to the figures and the description of the figures.

### Figures

Further advantages and embodiments of the subject-matters as described herein are described in the figures and the following description of the figures, wherein the features described may be part of the invention alone or in any combination, insofar it is not excluded due to the description or the context. It has to be noted that the figures are of illustrative purpose, only, and are not meant to restrict the present subject-matters.
- Fig. 1: shows a schematic view of an electric energy unit and a safety apparatus with a trigger device according to an embodiment of the invention; and
- Fig. 2: shows a schematic view of a safety apparatus with a trigger device according to another embodiment of the invention;
- Fig. 3: shows a top view of the trigger device shown in Fig 2;
- Fig. 4: shows a schematic view of an electric energy unit element and a trigger device according to another embodiment of the invention; and
- Fig. 5: shows a schematic view of a trigger device according to yet another embodiment of the invention.

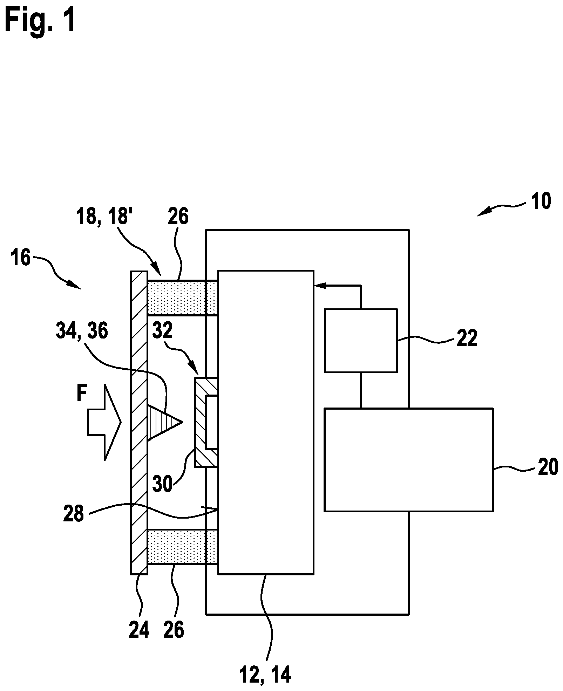

According to figure 1, a schematic structure of an electric energy store device 10 is shown. The electric energy store device 10 comprises an electric energy store unit 12, which is a battery unit 14 in the shown example, and a safety apparatus 16 for protecting said electric energy store unit 12. The safety apparatus 16 comprises a trigger device 18, a monitoring circuitry 20, and a discharge device 22 for a controlled discharging of the electric energy store unit 12. The discharge device 22 is a kind of safety device, wherein the discharging of the electric energy store unit 12 is the corresponding safety measure of said safety device. The trigger device 18 is set up for triggering the discharge device 22 in the event of an external mechanical impact on said electric energy store unit 12 or that electric energy store device 10 as a whole respectively. The battery unit 14 especially is a battery unit 14 for a traction battery for a vehicle with electric drive, hybrid drive or plug-in hybrid drive.

The trigger device 18 on its part comprises a plate-like trigger element 24 mounted by means of two or more deformable intermediate elements 26 on the surface 28 of the electric energy store unit 12. At the same time the plate-like trigger element 24 covers a part of the surface 28 of the electric energy store unit 12. The trigger device 18 further comprises an electrically conducting element 30 forming an electrically conducting path 32. Said electrically conducting element 30 or electrically conducting path 32 respectively is mechanically coupled to the plate-like trigger element 24 via an intermediate element being a destruction tool 34, namely a knife-like splitting tool 36 for interrupting the electrical connection of the conducting path 32.

Thus the plate-like trigger element 24 is mechanically coupled to the electrically conducting path 32 in such way, that a deformation and/or shift of the plate-like trigger element 24 caused by a force F of the external mechanical impact acting on said plate-like trigger element 24 will generate a trigger signal by rapidly increasing the electrical resistance of the conducting path 32.

The monitoring circuitry 20 is electrically connected to the electrically conducting path 32 and the electrical resistance of the electrically conducting path 32 is monitored by use of said monitoring circuitry 20. The discharge device 22 is set up to discharge the electric energy store unit 12 in response to the trigger signal of the trigger device 18, namely the rapidly increased resistance of the conducting path 32 monitored/detected by the monitoring circuitry 20.

This gives the following function: a deformation and/or shift of the plate-like trigger element 24 caused by the force F of the external mechanical impact acting on said plate-like trigger element 24 rapidly increases the electrical resistance of the conducting path 32 by interrupting/disconnecting the electrically conductive connection via the electrically conducting path 32. The monitoring circuitry 20 will detect a rapid increase of the electrical resistance of the electrically conducting path 32 which will trigger the discharge of the electric energy store unit 12 by means of the discharge device 22.

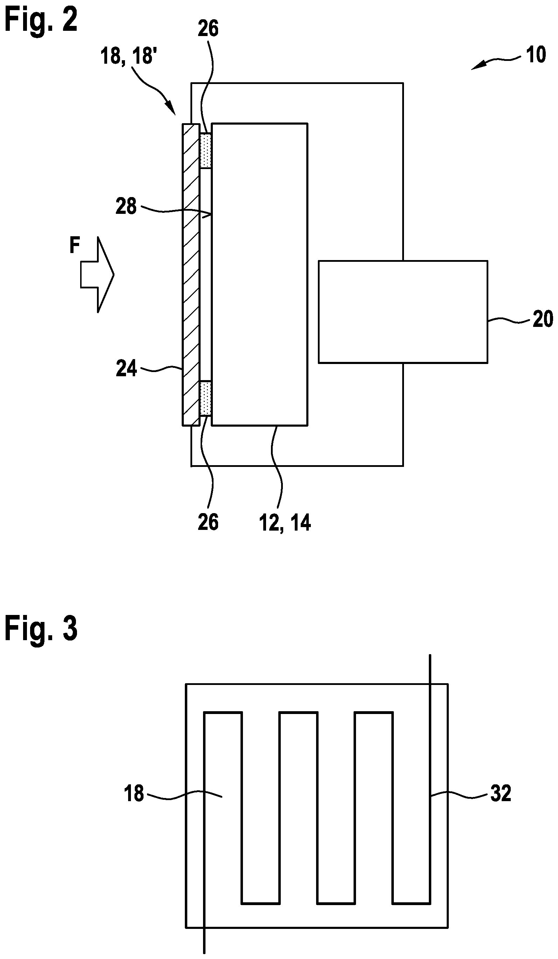

Figure 2 shows a second embodiment of the electric energy store device 10 with a different design of the trigger device 18. The trigger device 18 comprises a plate-like trigger element 24 mounted by means of two or more intermediate elements 26 on the surface 28 of the electric energy store unit 12. The electrically conducting path 32 of the trigger device 18 shown in figure 2 is meander-shaped and located on plate-like trigger element 24 as explicitly shown in figure 3. The monitoring circuitry 20 is electrically connected to the electrically conducting path 32 and the electrical resistance of the electrically conducting path 32 is monitored by use of said monitoring circuitry 20. A fracture of the plate-like trigger element 24 caused by the force F of the external mechanical impact acting on said trigger element 24 rapidly increases the electrical resistance of the conducting path 32 by interrupting/disconnecting the electrically conductive connection via the electrically conducting path 32.

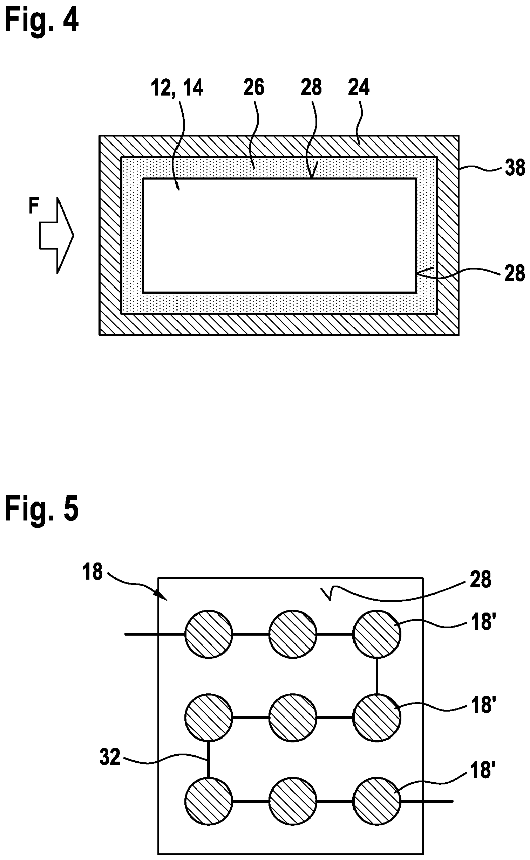

Figure 4 shows a further embodiment of the electric energy store device 10 with another different design of the trigger device 18. In this embodiment a plurality of plate-like trigger elements 24 are forming an outer shell 38 including the electric energy store unit 12. The gap between the surface 28 of the electric energy store unit 12 and the outer shell 38 formed by the plate-like trigger elements 24 is filled by a layer-like deformable intermediate element 26. The intermediate element 26 decouples the outer shell 38 from the electric energy store unit 12.

Figure 5 shows a last embodiment of the electric energy store device 10 with yet another different design of the trigger device 18. The trigger device 18 shown in figure 5 comprises a plate-like trigger element 24 and an electrically conducting path 32 with multiple sections, wherein selected sections of the electrically conducting path 32 are parts of different trigger modules 18' designed in the same way as the trigger devices 18 shown in figures 1 to 3 of the first two embodiments.

## Claims

1. A trigger device (18) for triggering a safety device (22) for taking safety measures concerning an electric energy store unit (12), especially a discharge device for discharging of said electric energy store unit (12), in the event of an external mechanical impact on said electric energy store unit (12), the trigger device (18) including:
- a plate-like trigger element (24) and
- an electrically conducting path (32) mechanically coupled to the plate-like trigger element (24) in such way, that a deformation and/or fracture and/or shift of the plate-like trigger element (24) caused by a force F of the external mechanical impact acting on said plate-like trigger element (24) generates a trigger signal by rapidly increasing the electrical resistance of the conducting path (32).

2. The trigger device according to claim 1, **characterized by** at least one deformable intermediate element (26) for mounting the plate-like trigger element (24) on the surface (28) of the electric energy store unit (12).

3. The trigger device according to claim 1 or 2, **characterized by** a destruction tool (34), especially a knife-like splitting tool (36), for interrupting the electrical connection of the conducting path (32).

4. The trigger device according to one of claims 1 to 3, **characterized in that** a plurality of plate-like trigger elements (24) are forming an outer shell (38) for including the electric energy store unit (12).

5. The trigger device according to one of claims 1 to 4, **characterized in that** the complete conducting path or at least one of a plurality of sections of said conducting path (32) is located on and/or in the plate-like trigger element (24).

6. The trigger device according to one of claims 1 to 5, **characterized in that** the conducting path or at least one of a plurality of sections of said conducting path (32) is meander-shaped.

7. A safety apparatus (16) comprising: the trigger device (18) according to one of claims 1 to 6, a monitoring circuitry (20) for monitoring the resistance of the conducting path (32) of said trigger device (18), and a safety device for taking safety measures concerning an electric energy store unit (12) in response to a trigger signal of the trigger device (18), namely a rapidly increased resistance of the conducting path (32).

8. An electric energy store device (10) comprising an electric energy store unit (12), especially a battery unit (14), and a safety apparatus (16) according to claim 7.

9. The electric energy store device according to claim 7, **characterized in that** the unit (12, 14) is a Li-Ion battery unit with at least one Li-Ion battery element.

10. A method for triggering safety measures of a safety device concerning an electric energy store unit (12), especially a discharge of said electric energy store unit (12), by use of a trigger device (18) in the event of an external mechanical impact on the electric energy store unit (12), the trigger device (10) including a plate-like trigger element (24) covering at least a part of the surface (28) of the electric energy store unit (12) and an electrically conducting path (32), wherein the electrically conducting path (32) is mechanically coupled to the plate-like trigger element (24) in such way, that a deformation and/or fracture and/or shift of the plate-like trigger element (24) caused by a force F of the external mechanical impact acting on said plate-like trigger element (24) will generate a trigger signal by rapidly increasing the electrical resistance of the conducting path (32).
